# EUROPEAN PATENT SPECIFICATION

(11) **EP 0 657 099 B1**
(45) Date of publication and mention of the grant of the patent: **04.11.1998**
(21) Application number: 94119356.7
(22) Date of filing: 07.12.1994
(51) Int. Cl.: A01N 43/86

(54) **Herbicidal composition**
Herbicide Zusammensetzung
Composition herbicide

(30) Priority: 09.12.1993 JP 340714/93
(43) Date of publication of application: 14.06.1995
(73) Proprietor: RHONE-POULENC AGRO, 69009 Lyon (FR)
(72) Inventor: Jikihara, Kazuo, Ibaraki 300-12 (JP); Morishige, Jiro, Ibaraki 301 (JP); Maruyama, Toshishiro, Ibaraki 301 (JP)

(56) References cited:
- WO-A-93/15064

## Description

This invention relates to herbicidal compositions comprising as active ingredients a 1,3-oxazin-4-one derivative and a known sulphonylurea derivative. The compositions show broad herbicidal spectra and sufficient herbicidal effects at low doses.

Many herbicides are in practical use, for example in paddy fields. Even today, however, it is desirable to develop herbicides with better herbicidal effects, for example without phytotoxicity against rice plants, with a wide herbicidal spectrum, and effective at low doses. However, the known herbicides do not satisfy these requirements.

The present inventors have carried out intensive studies to develop herbicides satisfying the above requirements, and have now found such a herbicidal composition by combining certain 1,3-oxazin-4-one derivatives and certain known sulfonylurea derivatives. It has been found that such novel herbicidal compositions can control selectively and synergistically a broad spectrum of weeds in paddy fields. Consequently they can be used at lower doses and with a wider herbicidal spectrum than expected.

The herbicidal compositions of this invention are characterized by containing as active ingredients the following two components, (A): at least one 1,3-oxazin-4-one derivative (hereinafter referred to as "Component A") of the formula: 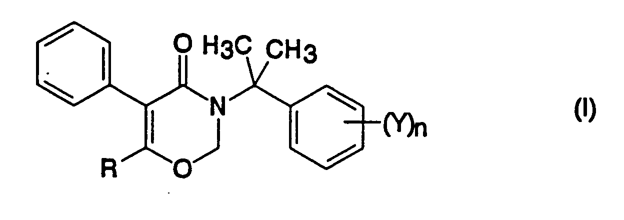 wherein R is a methyl or ethyl group, Y is a halogen atom, a C₁₋₆ alkyl group unsubstituted or substituted by one or more halogen atoms, or a C₁₋₆ alkoxy group unsubstituted or substituted by one or more halogen atoms, and n is 0, 1, 2 or 3; and (B): a sulfonylurea derivative (hereinafter referred to as "Component B") such as 1-{[ortho-(cyclopropylcarbonyl)phenyl]sulfamoyl}-3-(4,6-dimethoxy-2-pyrimidinyl)urea, also known as cyclosulfamuron; the said compositions comprising also an agriculturally acceptable diluent or carrier.

1,3-Oxazin-4-one derivatives represented by the general formula (I), which can be used as Component A in the herbicidal compositions of this invention, and the detailed descriptions of their preparation, have been disclosed in the description of published European patent application 605 726.

In the definition of the group Y, "halogen atom" means fluorine, chlorine, bromine or iodine.

Examples of C₁₋₆ alkyl groups substituted by one or more halogen atoms include bromomethyl, dichloromethyl, trifluoromethyl, 2-iodoethyl, 1-chloroethyl, 3-chloropropyl, 2-methyl-2-chloropropyl and 2,2,2-trifluoroethyl.

Examples of C₁₋₆ alkoxy groups substituted by one or more halogen atoms include trifluoromethoxy, difluoromethoxy, chlorodifluoromethoxy, 2-chloroethoxy, 1,1,2,2-tetrafluoroethoxy, 3-chloropropoxy and 2,2,3,3,3-pentafluorochloropropoxy.

Y is preferably a chlorine or fluorine atom, methyl unsubstituted or substituted by halogen, or methoxy unsubstituted or substituted by halogen, especially methyl substituted by one or more chlorine or fluorine atoms or methoxy substituted by one or more chlorine or fluorine atoms.

When n is 2 or 3, the groups Y may be the same or different.

Examples of the compounds of the general formula (I) are as follows:
No.1: 6-Methyl-3-[1-methyl-1-(3,5-dichlorophenyl)ethyl]-5-phenyl-2,3-dihydro-4H-1,3-oxazin-4-one
No.2: 6-Methyl-3-[1-methyl-1-(3-chlorophenyl)ethyl]-5-phenyl-2,3-dihydro-4H-1,3-oxazin-4-one
No.3: 6-Methyl-3-[1-methyl-1-(3-fluorophenyl)ethyl]-5-phenyl-2,3-dihydro-4H-1,3-oxazin-4-one
No.4: 6-Methyl-3-[1-methyl-1-(4-fluorophenyl)ethyl]-5-phenyl-2,3-dihydro-4H-1,3-oxazin-4-one
No.5: 6-Methyl-3-[1-methyl-1-(2-chlorophenyl)ethyl)-5-phenyl-2,3-dihydro-4H-1,3-oxazin-4-one
No.6: 6-Methyl-3-[1-methyl-1-(3-methylphenyl)ethyl)-5-phenyl-2,3-dihydro-4H-1,3-oxazin-4-one
No.7: 6-Methyl-3-[1-methyl-1-(3-difluoromethoxyphenyl)ethyl]-5-phenyl-2,3-dihydro-4H-1,3-oxazin-4-one.

The compounds of general formula (I) can be prepared by, for example, the preparation methods described in the following chemical reactions: 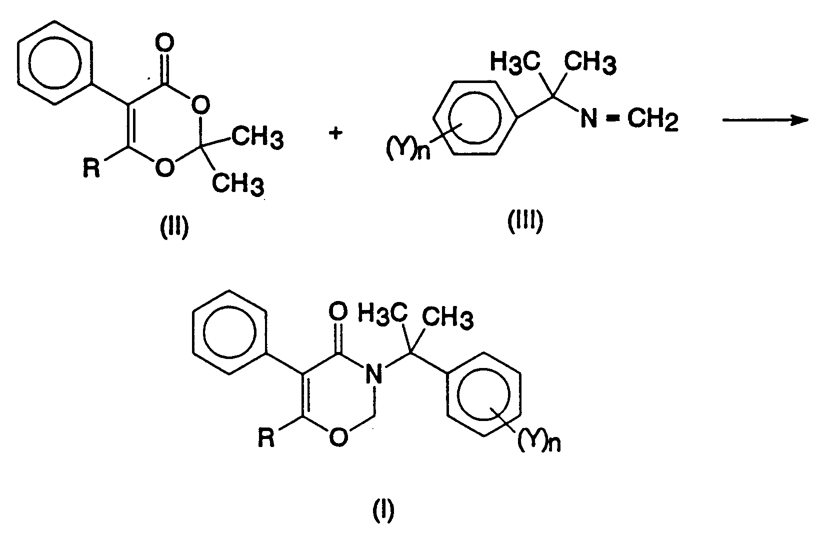 wherein R, Y and n are as hereinbefore defined.

The reaction of the compound of general formula (II) and the compound of general formula (III) can be achieved in a suitable solvent or without solvent. The reaction temperature can be set optionally between about 90°C and about 160°C, or in the range of the boiling point of the solvent used. Any solvent may be used, provided that it is substantially inert. However, it is preferred from the viewpoint of reaction temperature to use solvents with high boiling points, e.g. over 90°C, such as toluene, xylene and mesitylene.

The reaction time may vary depending on the reaction conditions used, but the reaction may typically be completed in 1 to 120 minutes.

Further, there is no strict limitation for the proportions of the compounds of formula (II) to the compounds of formula (III), and it is convenient to use the compounds of formula (II) in an amount within the range of usually 0.5 to 2 moles, and particularly 0.9 to 1.1 moles, per mole of the compounds of formula (III).

Separation and purification of the compounds of formula (I) produced may be carried out by methods known per se, such as recrystallization, extraction, or chromatography.

The compounds of formula (II) which are used as starting material for the above chemical reaction can be prepared by methods known per se, for example the method published in Chem. Pharm. Bull, 31 (6), 1895-1901 (1983).

The compound of formula (III) can be prepared by methods known per se, for example the method disclosed in the description of USA Patent No. 2,571,759.

The compounds of formula (III) can be prepared by the following chemical reaction: 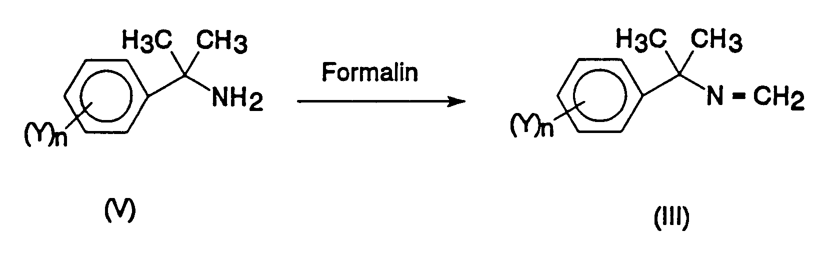 wherein Y and n are as hereinbefore defined, by dropwise addition of the compounds of formula (V) to formalin.

The reaction is preferably performed at room temperature. The reaction time may vary depending on the reaction conditions used, but the reaction may typically be completed in 0.1 to 10 hours. The compound of formula (III) can be isolated from the reaction mixture by methods known per se, and be purified by methods such as recrystallization, evaporation, or column chromatography.

The sulfonylurea derivatives such as 1-{[ortho-(cyclopropylcarbonyl)phenyl]sulfamoyl}-3-(4,6-dimethoxy-2-pyrimidinyl)urea (also known as "AC-140", "AC-322140", or cyclosulfamuron): 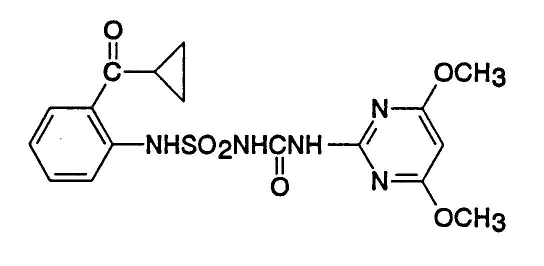 used as component (B) in the herbicidal compositions of this invention are known herbicides. Details of preparation methods, characteristics and herbicidal effects are described, for example, in Japanese Laid-open Patent Publication No. H4-224567.

Furthermore, other herbicides may optionally be combined with the herbicidal compositions of this invention, for example in order to increase the herbicidal effect, to enlarge the range of weeds that may be targeted, to expand the time period over which treatment is effective, to increase residual effects or to reduce phytotoxicity under bad conditions.

For this combination advantageous examples include the following herbicides:

### Phenoxy herbicides

2,4-dichlorophenoxyacetic acid (common name: 2,4-D, see THE PESTICIDE MANUAL 9th Ed. (1991), P.218-219),
4-(4-chloro-2-methylphenoxy)butyric acid (common name: MCPB, SEE U.K. Patent No. 758,980),
4-chloro-2-methylphenoxyacetic acid (common name: MCPA, see THE PESTICIDE MANUAL 9th Ed. (1991), P.533),
2-(2-naphthyloxy)propionanilide (common name: Naproanilide, see THE PESTICIDE MANUAL 9TH Ed. (1991), P.610),
S-ethyl(4-chloro-2-methylphenoxy)ethanethioate (common name: MCPA-thioethyl, see USA Patent No. 3708278).

### Diphenyl ether herbicides

2,4-dichlorophenyl 3'-methoxy-4'-nitro-phenyl ether (common name: Chlomethoxynyl, see Pesticide Handbook, 1989 Ed., P.500). Bifenox and Acifluorfen may also be used.

### Acid amide herbicides

N-Butoxymethyl-2-chloro-2',6'-diethyl acetanilide (common name: Butachlor, see the description of USA Patent No. 3442945),
2-chloro-2',6'-diethyl-N-(n-propoxy ethyl)-acetanilide (common name: Pretilachlor, see Japanese Laid-open Patent Publication No. S49-54527),
2-benzothiazol-2-yloxy-N-methyl-acetanilide (common name: Mefenacet, see Japanese Laid-open Patent Publication No. S54-154762).

### Diazine herbicides

4-(2,4-dichlorobenzoyl)-1,3-dimethylpyrazol-5-yltoluene-4-sulfonate (common name: Pyrazolate, see Japanese Laid-open Patent Publication No. S50-126830),
2-[[4-(2,4-dichlorobenzoyl)-1,3-dimethyl-1H-pyrazol-5-yl]oxy]-1-phenylethanone (common name: Pyrazoxyfen, see U.K. Patent No. 2,002,375),
3-isopropyl-1H-2,1,3-benzothiadiazin-4 (3H)-one-2,2-dioxide (common name: Benthazone, see the description of USA Patent No. 3708277).

### Triazine herbicides

2,4 bis(ethylamino)-6-methylthio-S-triazine (common name: Simetryn, see the description of Swiss Patent No. 337019).
2-(1,2-dimethylpropylamino)-4 ethylamino-6-methylthio-S-triazine (common name: Dimethametryn, see the description of Belgian Patent No. 714992).

### Carbamate herbicides

S-1-methyl-1-phenylethyl piperidine-1-carbothioate (common name: Dimepiperate, Japanese Laid-open Patent Publication No. S51-98331),
methyl (3,4-dichlorophenyl)-carbamate (common name: Swep, see THE PESTICIDE MANUAL 9th Ed. (1991), P.927),
S-(4-chlorobenzyl)-diethyl-thiocarbamate (common name: Thiobencarb, see Japanese Patent Publication No. S43-29024).
S-ethylhexahydro-1H-azepine-1-carbothioate (common name: Molinate, see the description of USA Patent No. 3,198,786).
S-benzyl 1,2-diethylpropyl(ethyl)thiocarbamate (common name: Esprocarb, see the description of USA Patent No. 3,742,005).

### Orgnophosphorus herbicides

S-2-methylpiperidinocarbonylmethyl O,O-dipropyl phosphorodithioate (common name: Piperophos, see the description of Belgian Patent No. 725,992),
S-2-benzenesulfonylaminoethyl O,O-diisopropyl phosphorothioate.

### Urea herbicides

1-(α,α-dimethylbenzyl)-3-p-tolyurea (common name: Dimuron, Japanese Patent Publication S48-35454).

When used in combination with the compositions of the present invention, the above-mentioned herbicides may be referred to as "Component C". Among these compounds, 1-α,α-dimethylbenzyl)-3-p-tolylurea (hereinafter this may be named as "SK-23") is most preferred as Component C.

Furthermore, other components such as insecticides, fungicides and plant growth regulators may be combined with the compositions of the invention depending on necessity.

The ratio of 1,3-oxazin-4-one derivative of formula (I) (Component A) to sulfonylurea derivative (Component B) used in the herbicidal compositions of the invention can be varied over a wide range depending on, for example, treatment areas, weeds targeted, and application times. Component B is preferably used in a ratio of 0.01 to 100 weight parts, more preferably 0.1 to 5 weight parts, per weight part of Component A.

In the present specification, all ratios and percentages are by weight unless otherwise expressly stipulated.

When a Component C is added to the above herbicidal composition, the mixing ratio is not limited, and can be varied over a wide range depending on, for example, treatment areas, weeds targeted, and application times.

When the above-mentioned SK-23 is used as Component C, for example, it is preferably used in a ratio of 0.01 to 100 weight parts, more preferably 5 to 50 weight parts, per weight part of Component A.

The active ingredients of the composition of the invention may be mixed with solid or liquid carriers, diluents, surfactants or other auxiliaries for formulation known per se, according to methods known per se, as agrochemical formulations, for example as granules, wettable powders, or flowable formulae.

Solid carriers usable in preparation of herbicides, include, for example, clays such as kaolinites, montmorillonites, illites and polygroskites, especially pyrophyllite, attapulgite, sepiolite, kaolinite, bentonite, saponite, vermiculite, mica and talc; other inorganic substances such as gypsum, calcium carbonate, dolomite, diatomaceous earth, calcite, magnesium lime, apatite, zeolite, silicic anhydride and synthetic calcium silicate; vegetable origin organic substances such as soybean meal, tobacco meal, walnut meal, wheat flour, sawdust, starches and crystalline cellulose; synthetic or natural high molecular compounds such as cumarone resin, petroleum resin, alkyd resin, poly (vinyl chloride), polyalkylene glycol, ketone resin, ester gum, copal gum and damal gum; waxes such as carbana wax and bees wax; and urea.

Suitable liquid carriers include, for example, paraffin or naphthene hydrocarbons such as kerosine, mineral oil, spindle oil and white oil; aromatic hydrocarbons such as xylene, ethylbenzene, cumene and methylnaphthalene; chlorinated hydrocarbons such as trichloroethylene, monochlorobenzene and o-chlorotoluene; ethers such as dioxane and tetrahydrofuran; ketones such as methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as n-hexanol, ethylene glycol, diethylene glycol, cyclohexanol and benzyl alcohol; ether alcohols such as ethylene glycol ethyl ether, ethylene glycol phenyl ether, diethylene glycol ethyl ether and diethylene glycol butyl ether; polar solvents such as dimethylformamide and dimethyl sulfoxide; and water.

Surfactants and other auxiliaries or adjuvants may additionally be used, for example for the purposes of emulsification, dispersion, wetting, spreading and binding of the active ingredients, adjustment of disintegrability, stabilization of the active ingredients, improvement of fluidity and corrosion protection.

Any nonionic, anionic, cationic or ampholytic surfactants may be used, but nonionic and/or anionic surfactants are preferred.

Suitable nonionic surfactants include, for example, a compound obtained by adding ethylene oxide through polymerization to a higher alcohol such as lauryl alcohol, stearyl alcohol or oleyl alcohol; a compound obtained by adding ethylene oxide through polymerization to an alkylphenol such as isooctylphenol or nonylphenol; a compound obtained by adding ethylene oxide through polymerization to an alkylnaphthol such as butylnaphthol or octylnaphthol; a compound obtained by adding ethylene oxide through polymerization to a higher fatty acid such as palmitic acid, stearic acid or oleic acid; a compound obtained by adding ethylene oxide through polymerization to an amine such as dodecylamine or stearylamide; a higher fatty acid ester of a polyhydric alcohol such as sorbitan and a compound obtained by adding ethylene oxide through polymerization thereto; a compound obtained by block polymerization of ethylene oxide and propylene oxide.

Suitable anionic sufactants include, for example, alkyl sulfate ester salts such as sodium lauryl sulfate or oleyl alcohol sulfate ester amine salts; alkylsulfonate salts such as sodium dioctyl sulfosuccinate or sodium 2-ethyl-hexenesulfonate; arylsulfonate salts such as sodium isopropylnaphthalenesulfonate, sodium methylenebisnaphthalenesulfonate, sodium lignosulfonate or sodium dodecylbenzenesulfonate.

High molecular compounds such as casein, gelatin, albumin, glue, lignosulfonate salts, alginate salts, gum arabic, carboxymethylcellulose, methylcellulose, hydroxyethylcellulose, polyvinylaldol, polyvinylpyrrolidone and polysaccharides, and other auxiliaries, may also be used in the compositions of the invention, for example to improve the functional characteristics of the formulations and to enhance herbicidal efficacy.

The above carriers and various auxiliaries can be used alone or in combination as appropriate, depending, for example, on the formula and application sites.

The content of active ingredients in the composition of the invention can be varied according to the formulation. It is generally in the range of 0.01 to 99% by weight, preferably 0.4 to 30% by weight.

Wettable powders generally contain 0.01 to 35% by weight of active ingredients, together with a solid carrier and other ingredients such as dispersing and wetting agents, a protective colloid agent and an antifoaming agent.

Granule formulations generally contain 0.01 to 35% by weight of active ingredients, together with e.g. a solid carrier and a surfactant. The active ingredients are usually uniformly mixed with the solid carrier, or uniformly adhered to the surface of the solid carrier or adsorbed on the surface. The diameter of the granule is preferably in the range of about 0.2 to 1.5 mm.

Flowable formulations generally contain 0.5 to 50% by weight of active ingredients, 3 to 10% by weight of dispersing and wetting agetns, and the rest water. When needed, other ingredients such as a protective agent, an antiseptic agent, or an antifoaming agent, can be added thereto.

Appropriate application rates of the compositions of the invention will depend on, for example, weather conditions, solid conditions, formulated forms of chemicals, crops targeted, weeds targeted, application times and application methods. However, the rate is preferably within the range of 0.01 to 10 kg, more preferably 0.01 to 2 kg per hectare in terms of the total amount of active ingredients.

The invention is also directed to a method of controlling the growth of weeds at a locus which comprises applying to the locus a herbicidally effective amount of a 1,3-oxazin-4-one derivative (A) and a sulfonylurea derivative (B) as hereinbefore defined.

The invention is advantageously used for a cropping area, especially a rice cropping area such as a paddy-field. The method of the invention for controlling the growth of weeds is also most appropriate to control the weeds listed in the instant specification.

A cropping area comprises a locus which is planted or going to be planted with a crop.

It is also possible, when needed, to use the compositions of this invention in admixture with other chemicals such as insecticides, fungicides, plant growth regulators, herbicides, and fertilizers.

The herbicidal compositions of the invention show a higher effect at low doses of active ingredients against wide-ranging weeds growing in paddy-fields, for example, annual weeds such as Nobie (Echinochloa oryzicola), Konagi (Monochoria vaginalis), Azena (Lindernia procumbens), Tamagayatsuri (Cyperus microiria), Hotarui (Scirpus Juncoides) and Heraomodaka (Alisma canaliculatum), and perennial weeds which are hard to control such as Mizugayatsuri (Cyperus serotinus), Urikawa (Sagittaria pygmaea), and Kuroguwai (Eleocharis kuroguwai), and are safe to use on paddy rice without causing phytotoxicity, which becomes a problem when conventional methods are used.

The herbicidal compositions of the invention are effective in controlling annual weeds growing in fields such as Nobie (Echinochloa crusgalli), Mehishiba (Digitaria ciliaris), Enokorogusa (Setaria viridis), and perennial weeds which are hard to control such as Hamasuge (Cyperus rotundus).

In addition, application times can be chosen in the wide range from pre-transplantation of rice seedlings to the early growing stage of weeds (about 20 days after transplantation). The herbicidal compositions of this invention make complete control available by a single application, and so the workload for weed control can be reduced significantly.

Furthermore, the herbicidal compositions of this invention show not only a high herbicidal effect due to each individual active ingredient, but also a strong synergistic effect, and so may be used at very low application rates compared to herbicides being used at present. Consequently the compositions of the invention are safer to the environment as well as to agricultural workers than herbicides in use at present.

The invention is illustrated by the following Examples:

### Preparation Example 1

### Preparation of 6-methyl-3-[1-methyl-1-(3,5-dichlorophenyl)ethyl]-5-phenyl-2,3-dihydro-4H-1,3-oxazin-4-one (Compound No. 1):

1-methyl-1-(3,5-dichlorophenyl)ethylamine (7.5g) was added slowly to formalin (37% HCHO aqueous solution) (4.6g) at room temperature. This mixture was allowed to react for 7 hours. Saturated aqueous solution of sodium bicarbonate was added to the reaction mixture, extracted with ether, the organic layer was rinsed with saturated saline solution, and dried by adding anhydrous sodium sulfate. The solvent was removed by evaporation under reduced pressure to obtain white crystals of N-methylene-1-methyl-1-(3,5-dichlorophenyl)ethylamine (8.6g).

Next, a mixture of 5-phenyl-2,2,6-trimethyl-2H,4H-1,3-dioxin-4-one (0.65g) and the above-obtained N-methylene-1-methyl-1-(3,5-dichlorophenyl)ethylamine (0.65g) was allowed to react with heating at 150°C for 30 minutes. The reaction mixture was recrystallized from a mixed solvent of hexane and ethylacetate to obtain the captioned compound (0.90g).

### Preparation Examples 2-7

With the same preparation methods described above for the preparation Example 1, compounds No. 2-7, which are listed in the following Table 1, where prepared from appropriate starting materials.

The melting points and ¹H-NMR peak values of the compounds produced by the preparation Examples 1-7 are shown in Table 1.

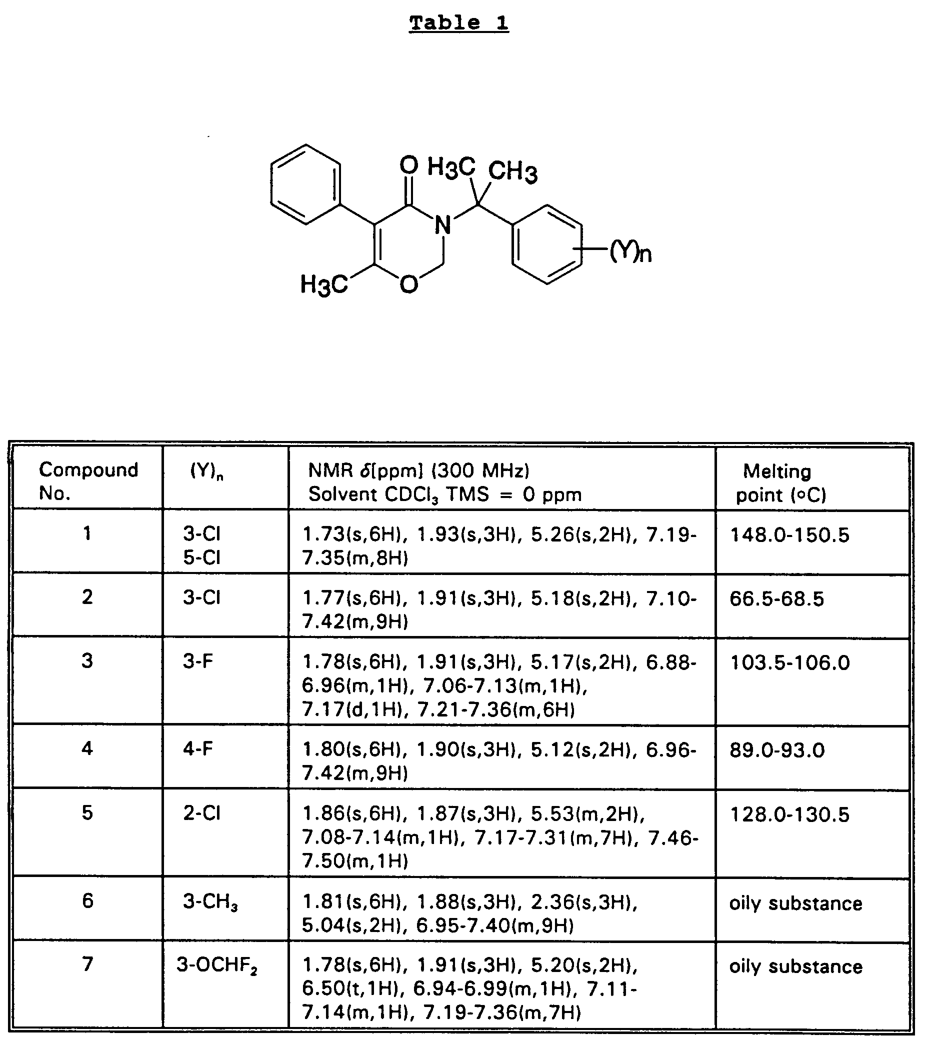

### Comparative Example 1 (granule formulation)

- Component A: Compound No. 1: 0.2% by weight
- Sodium lignosulfonate: 3% by weight
- Sodium dialkylnaphthalenesulfonate: 3% by weight
- Bentonite: 30% by weight
- Talc: 63.8% by weight

The above mixture was mixed and ground, granulated with a granulator according to conventional methods, and dried to obtain a granular formulate.

### Comparative Example 2 (granule formulation)

- Component B: AC-140: 0.2% by weight
- Sodium lignosulfonate: 3% by weight
- Sodium dialkylnaphthalenesulfonate: 3% by weight
- Bentonite: 30% by weight
- Talc: 63.8% by weight

The above mixture was mixed and ground, granulated with a granulator according to conventional methods, and dried to obtain a granular formulate.

### Comparative Example 3 (granule formulation)

- Component C: SK-23: 1.5% by weight
- Sodium lignosulfonate: 3% by weight
- Sodium dialkylnaphthalenesulfonate: 3% by weight
- Bentonite: 30% by weight
- Talc: 62.5% by weight

The above mixture was mixed and ground, granulated with a granulator according to conventional methods, and dried to obtain a granular formulate.

### Application Example 1 (granule formulation)

- Component A: Compound No.1: 0.2% by weight
- Component B: AC-140: 0.2% by weight
- Sodium lignosulfonate: 3% by weight
- Sodium dialkylnaphthalenesulfonate: 3% by weight
- Bentonite: 30% by weight
- Talc: 63.6% by weight

The above mixture was mixed and ground, granulated with a granulator according to conventional methods, and dried to obtain a granular formulate.

### Application Example 2 (granule formulation)

- Component A: Compound No.1: 0.2% by weight
- Component B: AC-140: 0.2% by weight
- Component C: SK-23: 1.5% by weight
- Sodium lignosulfonate: 3% by weight
- Sodium dialkylnaphthalenesulfonate: 3% by weight
- Bentonite: 30% by weight
- Talc: 62.1% by weight

The above mixture was mixed and ground, granulated with a granulator according to conventional methods, and dried to obtain a granular formulate.

### Comparative Example 4 (flowable formulation)

- Component A: Compound No.1: 0.4% by weight
- Polyoxyethylene nonylphenyl ether: 2% by weight
- Sodium dioctylsulfosuccinate: 2% by weight
- Xanthan gum: 0.2% by weight
- Water: 95.4% by weight

The above mixture was ground in wet system using a wet ball mill to obtain a flowable formulate.

### Comparative Example 5 (flowable formulation)

- Component B: AC-140: 0.6% by weight
- Polyoxyethylene nonylphenyl ether: 2% by weight
- Sodium dioctylsulfosuccinate: 2% by weight
- Xanthan gum: 0.2% by weight
- Water: 95.2% by weight

The above mixture was ground in wet system using a wet ball mill to obtain a flowable formulate.

### Comparative Example 6 (flowable formulation)

- Component C: SK-23: 4.5% by weight
- Polyoxyethylene nonylphenyl ether: 2% by weight
- Sodium dioctylsulfosuccinate: 2% by weight
- Xanthan gum: 0.2% by weight
- Water: 91.3% by weight

The above mixture was ground in wet system using a wet ball mill to obtain a flowable formulate.

### Application Example 3 (flowable formulation)

- Component A: Compound No.1: 0.4% by weight
- Component B: AC-140: 0.6% by weight
- Polyoxyethylene nonylphenyl ether: 2% by weight
- Sodium dioctylsulfosuccinate: 2% by weight
- Xanthan gum: 0.2% by weight
- Water: 94.8% by weight

The above mixture was ground in wet system using a wet ball mill to obtain a flowable formulate.

### Application Example 4 (flowable formulation)

- Component A: Compound No.1: 0.4% by weight
- Component B: AC-140: 0.6% by weight
- Component C: SK-23: 4.5% by weight
- Polyoxyethylene nonylphenyl ether: 2% by weight
- Sodium dioctylsulfosuccinate: 2% by weight
- Xanthan gum: 0.2% by weight
- Water: 90.3% by weight

The above mixture was ground in wet system using a wet ball mill to obtain a flowable formulate.

### Application Example 5 (wettable powder formulation)

- Component A: Compound No.1: 0.6% by weight
- Component B: AC-140: 0.6% by weight
- Sodium lignosulfonate: 3% by weight
- Sodium dialkylnaphthalenesulfonate: 3% by weight
- Kaolin: 92.8% by weight

The above mixture was mixed, ground and homogenized to obtain a wettable powder formulate.

### Application Example 6 (wettable powder formulation)

- Component A: Compound No.1: 0.6% by weight
- Component B: AC-140: 0.6% by weight
- Component C: SK-23: 4.5% by weight
- Sodium lignosulfonate: 3% by weight
- Sodium dialkylnaphthalenesulfonate: 3% by weight
- Kaolin: 88.3% by weight

The above mixture was mixed, ground and homogenized to obtain a wettable powder formulate.

The following Examples illustrate the effects of the herbicidal compositions of this invention.

### Test Example 1 (paddy-field foliar treatment)

Portions of paddy-field soil and portions of a compound fertilizer were put in Wagner pots having an area of 1/5,000 a, respectively, and an appropriate amount of water was added, followed by sufficient mixing to give a sort of paddy-field. Two-leaf stage paddy rice seedlings grown in advance in a greenhouse were transplanted to make two hills per pot each hill consisting of two rice seedlings.

Certain amounts of seeds of Nobie (Echinochloa oryzicola), Konagi (Monochoria vaginalis), Azena (Lindernia procumbens), and Hotarui (Scirpus Juncoides) were sown, respectively, per pot, certain amounts of tubers of Urikawa (Sagittaria pygmaea), and Mizugayatsuri (Cyperus serotinus) were planted, respectively, per pot, and water was poured into each pot to a water depth of 3 cm.

At the 2.5 leaf stage of Nobie (Echinochloa oryzicola) grown in a greenhouse, the formulated compositions prepared according to the application examples and comparative examples above were treated with adjusting the contents of the active ingredients to be the ratios described in Tables 2-5.

Herbicidal effect on each weed and phytotoxicity on the paddy rice were assessed after 30 days from the chemical treatment in accordance with the following criteria.

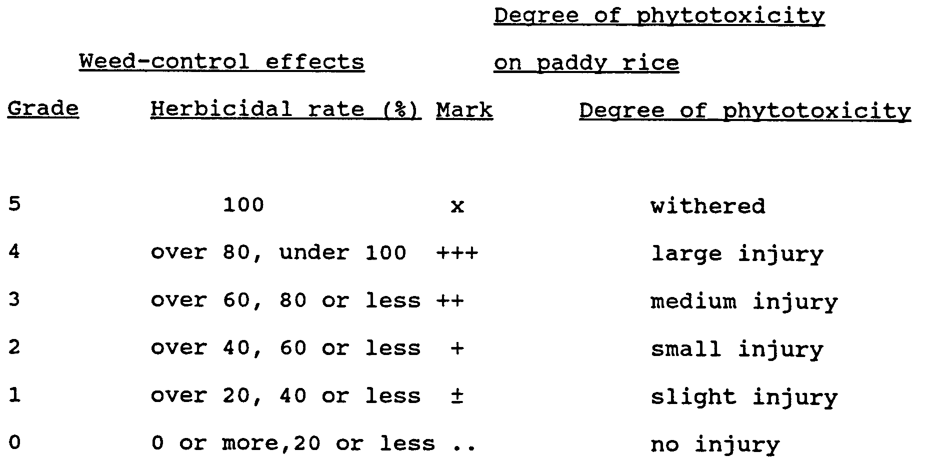

The results are shown in Table 2. From these results, it has been clarified that the herbicidal compositions of this invention can control various weeds at very low doses compared to that resulted from a single use of each active ingredient.

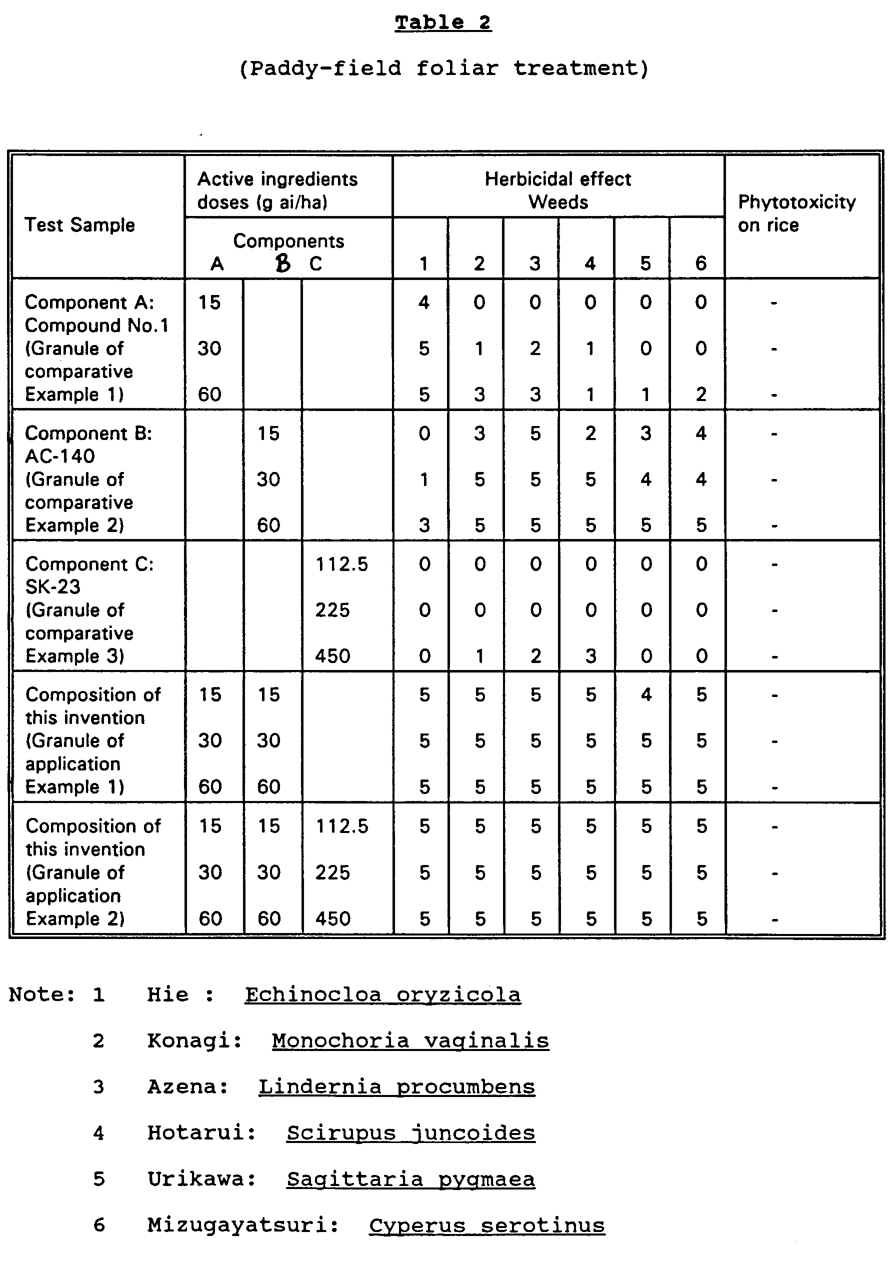

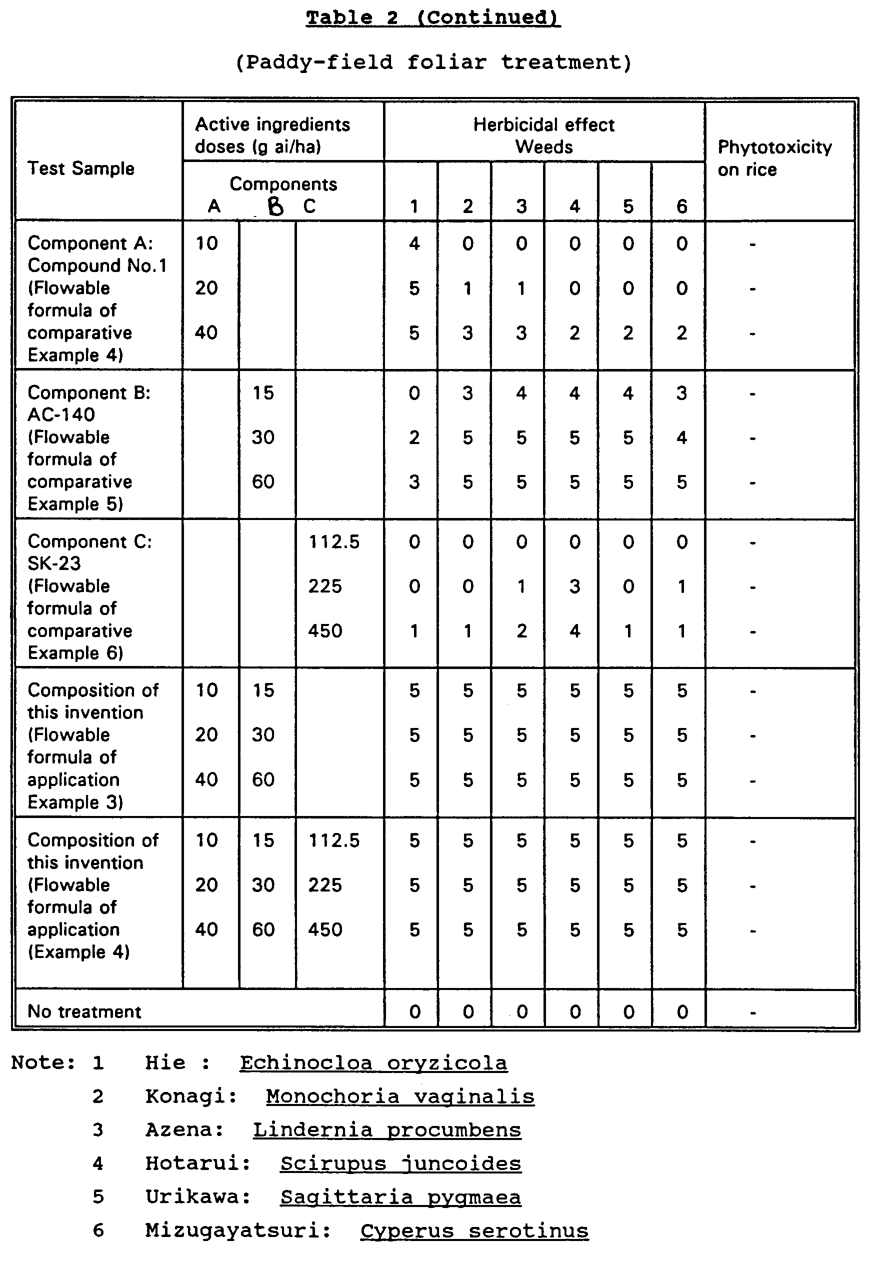

### Test Example 2 (field test)

A piece of paddy-field being transplanted with rice seedlings according to usual agricultural methods was partitioned to make one block 10 m² (4m x 2.5m) by using plastic sheet of poly (vinyl chloride). At the 2.5 leaf stage of Nobie (Echinochloa oryzicola) grown in the partitioned blocks, the formulates prepared as described previously in the application examples and comparative examples were treated in accordance with the doses of active ingredients shown in Table 3.

Afterwards, with performing usual water management of the paddy-field, herbicidal effect on each weed and phytotoxicity on rice plants were assessed in accordance with the criteria described in test Example 1. The results are shown in Table 3.

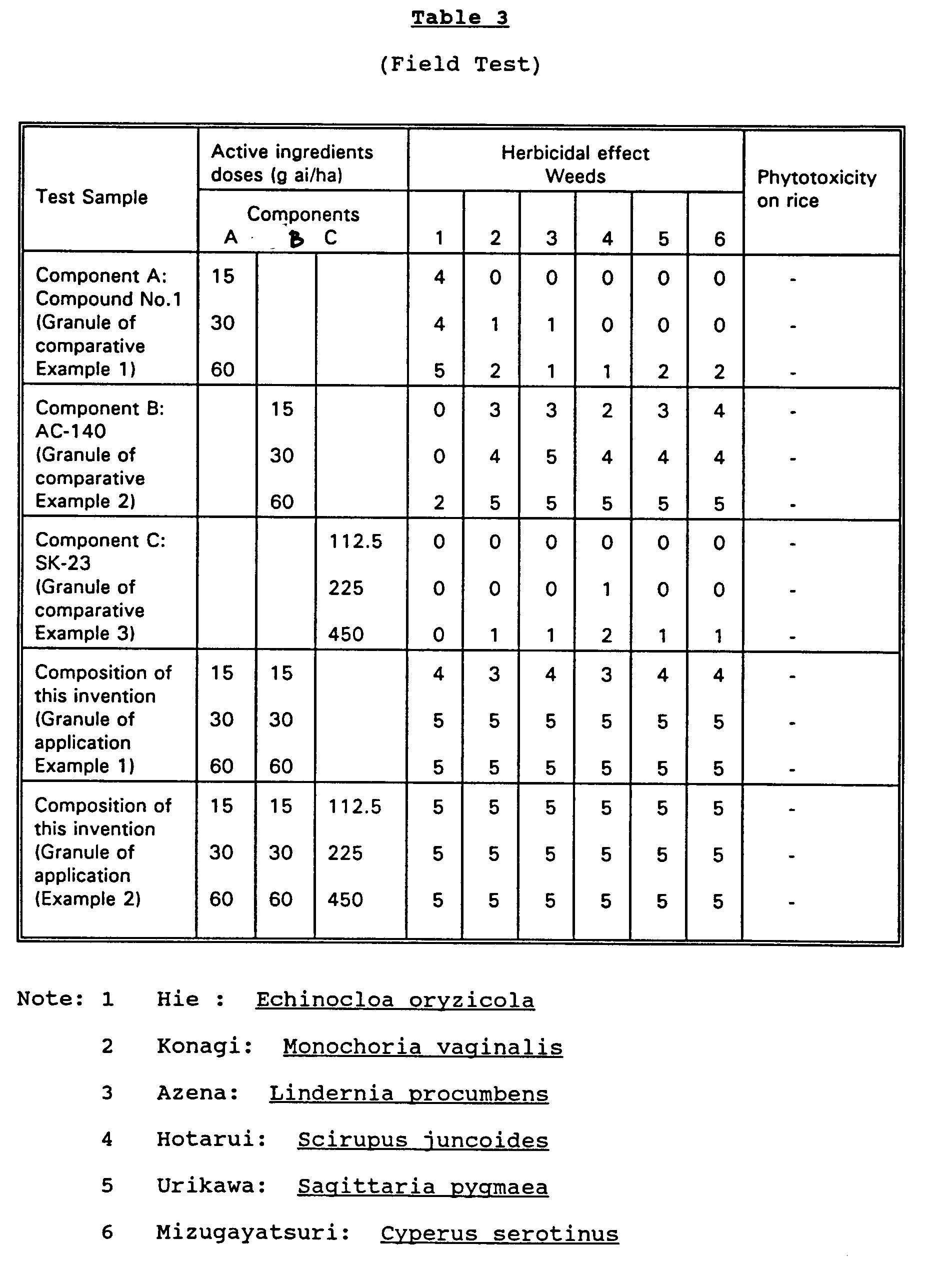

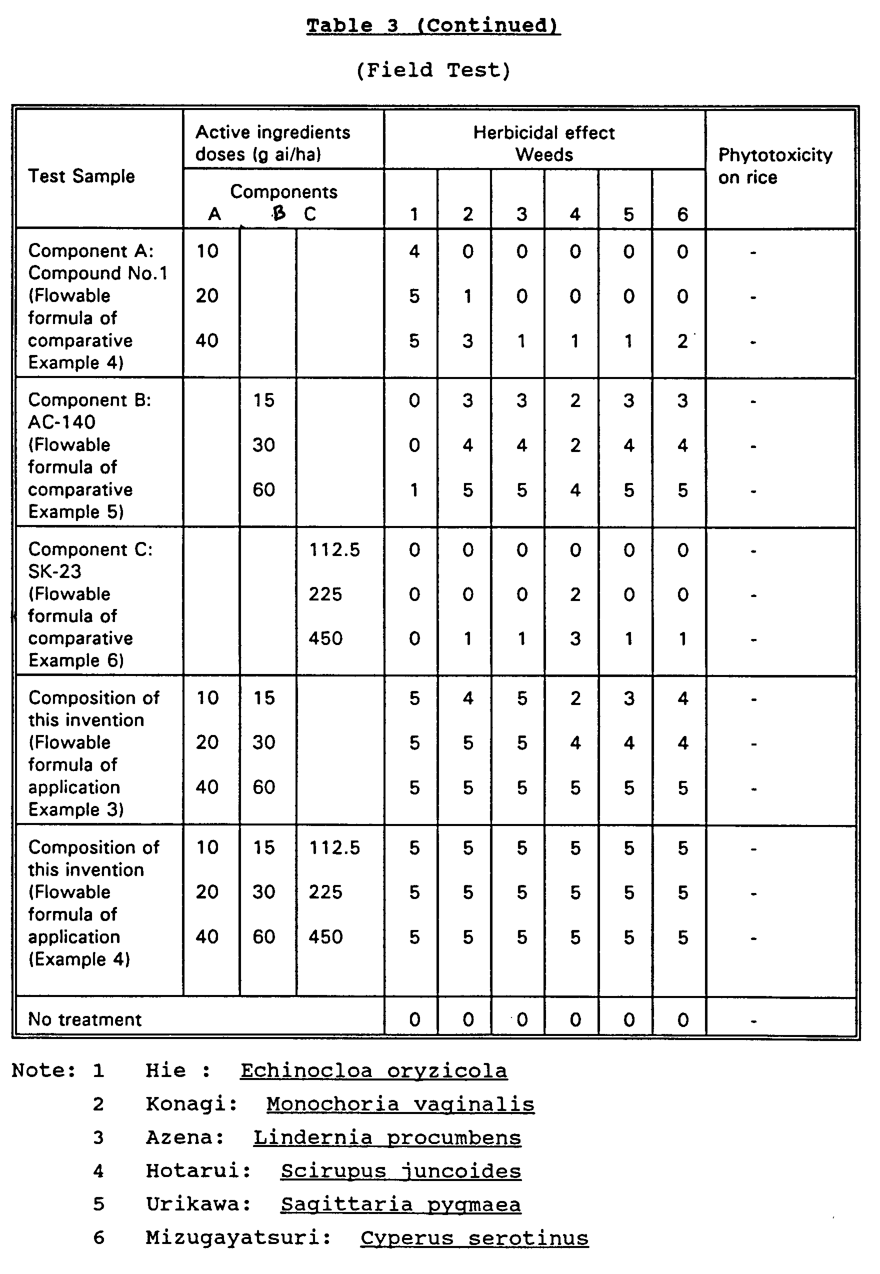

## Claims

1. A herbicidal composition comprising (A) at least one 1,3-oxazin-4-one derivative of the formula 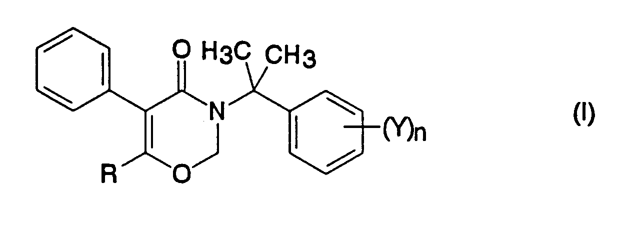 wherein R is methyl or ethyl; Y is a halogen atom, a C₁₋₆ alkyl group unsubstituted or substituted by one or more halogen atoms, or a C₁₋₆ alkoxy group unsubstituted or substituted by one or more halogen atoms; and n is 0, 1, 2 or 3; and (B) a sulfonylurea derivative; in association with an agriculturally acceptable diluent or carrier.

2. A herbicidal composition according to claim 1 wherein (B) is 1-{[ortho(cyclopropylcarbonyl)phenyl]sulfamoyl}-3-(4,6-dimethoxy-2-pyrimidinyl)urea.

3. A herbicidal composition according to claim 1 or 2 wherein Y is chloro, fluoro, methyl, fluoromethyl, fluoromethoxy, chloromethyl or chloromethoxy.

4. A herbicidal composition according to claim 3 wherein (Y)ₙ is 3-chloro, 3,5-dichloro, 3-fluoro, 4-fluoro, 2-chloro, 3-methyl or 3-difluoromethoxy.

5. A herbicidal composition according to any one of claims 1 to 4 further comprising (C) a third herbicidally active ingredient.

6. A herbicidal composition according to claim 5 wherein the third active ingredient is a phenoxy derivative, a diphenylether, an acid-amide, a diazine, a triazine, a carbamate, an organophosphorous compound or a urea derivative.

7. A herbicidal composition according to claim 5 or 6 wherein the third active ingredient is chosen from 2,4-D, MCPB, MCPA, Naproanilide, MCPA thioethyl, Chlomethoxynyl, Butachlor, Pretilachlor, Mefenacet, Pyrazolate, Pyrazoxyfen, Bentazone, Simetryn, Dimethametryn, Dimepiperate, Swep, Thiobencarb, Molinate, Esprocarb, Piperophos, Dimuron, SK-23, Bifenox and Acifluorfen.

8. A herbicidal composition according to claim 5 or 6 wherein the third active ingredient is chosen from 2,4-D, MCPB, MCPA, Naproanilide, MCPA thioethyl, Chlomethoxynyl, Butachlor, Pretilachlor, Mefenacet, Pyrazolate, Pyrazoxyfen, Bentazone, Simetryn, Dimethametryn, Dimepiperate, Swep, Thiobencarb, Molinate, Esprocarb, Piperophos, Dimuron and SK-23.

9. A herbicidal composition according to any one of the preceding claims which comprises from 0.01 to 99% (w/w) of active ingredients.

10. A herbicidal composition according to claim 9 which comprises from 0.4 to 30% (w/w) of active ingredients.

11. A herbicidal composition according to any one of the preceding claims wherein the ratio (w/w) B/A is from 0.01 to 100.

12. A herbicidal composition according to claim 11 wherein the ratio (w/w) B/A is from 0.1 to 5.

13. A herbicidal composition according to any one of claims 5 to 12 wherein the third active ingredient (C) is SK-23 and the ratio (w/w) C/A is between 5 and 50.

14. A herbicidal composition according to any one of the preceding claims further comprising at least one surfactant and adjuvant.

15. A herbicidal composition according to any one of claims 1 to 9 in the form of a wettable powder comprising 0.01 to 35% of active ingredients.

16. A herbicidal composition according to any one of claims 1 to 9 in the form of granules comprising 0.01 to 35% of active ingredients.

17. A herbicidal composition according to any one of claims 1 to 9 in the form of a flowable formulation comprising 0.5 to 50% of active ingredients, 3 to 10% of wetting or dispersing agents, and water.

18. A herbicidal composition according to claim 1 substantially as hereinbefore described in any one of Application Examples 1 to 6.

19. A herbicidal product comprising (A) a 1,3-oxazin-4-one derivative as defined in claim 1, and (B) a sulfonylurea derivative as a combined preparation for simultaneous, separate or sequential use in controlling the growth of weeds.

20. A method for controlling the growth of weeds at a locus which comprises applying to the locus a herbicidally effective amount of (A) a 1,3-oxazin-4-one derivative as defined in claim 1, and (B) a sulfonylurea derivative.

21. A method according to claim 20 wherein the locus is planted or is going to be planted with rice.

22. A method according to claim 20 or 21 wherein the weeds are Echinochloa oryzicola, Echinochloa crus-galli, Monochoria vaginalis, Lindernia procumbens, Cyperus microiria, Scirpus juncoides, Alisma canaliculatum, Cyperus serotinus, Sagittaria pygmae, Eleocharis kuroguwai, Digitaria ciliaris, Setaria viridis, or Cyperus rotundus.

## Patentansprüche

1. Herbizidzusammensetzung, die
(A) mindestens ein 1,3-Oxazin-4-on-Derivat der Formel 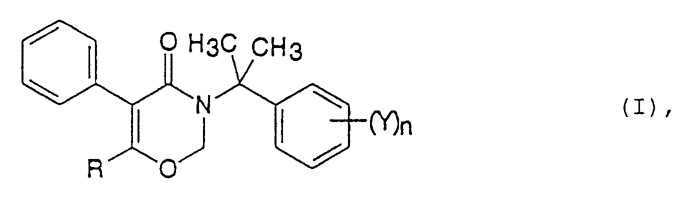 in der bedeuten:
R Methyl oder Ethyl,
Y ein Halogenatom, eine unsubstituierte oder mit einem oder mehreren Halogenatomen substituierte
C₁₋₆-Alkylgruppe oder eine unsubstituierte oder mit einem oder mehreren Halogenatomen substituierte
C₁₋₆-Alkoxygruppe und
n 0, 1, 2 oder 3 und
(B) ein Sulfonylharnstoff-Derivat in Kombination mit einem in der Landwirtschaft akzeptablen Verdünnungsmittel oder Träger enthält.

2. Herbizidzusammensetzung nach Anspruch 1, wobei (B) 1-{[o-Cyclopropylcarbonylphenyl]sulfamoyl}-3-(4,6-dimethoxy-2-pyrimidinyl)-harnstoff ist.

3. Herbizidzusammensetzung nach Anspruch 1 oder 2, wobei Y Chlor, Fluor, Methyl, Fluormethyl, Fluormethoxy, Chlormethyl oder Chlormethoxy ist.

4. Herbizidzusammensetzung nach Anspruch 3, wobei (Y)ₙ 3-Chlor, 3,5-Dichlor, 3-Fluor, 4-Fluor, 2-Chlor, 3-Methyl oder 3-Difluormethoxy ist.

5. Herbizidzusammensetzung nach einem der Ansprüche 1 bis 4, die außerdem einen dritten herbiziden Wirkstoff (C) enthält.

6. Herbizidzusammensetzung nach Anspruch 5, wobei der dritte Wirkstoff ein Phenoxy-Derivat, ein Diphenylether, ein Säureamid, ein Diazin, ein Triazin, ein Carbamat, eine phosphororganische Verbindung oder ein Harnstoff-Derivat ist.

7. Herbizidzusammensetzung nach Anspruch 5 oder 6, wobei der dritte Wirkstoff unter 2,4-D, MCPB, MCPA, Naptoanilid, MCPA-Thioethyl, Chlomethoxynyl, Butachlor, Pretilachlor, Mefenacet, Pyrazolat, Pyrazoxyfen, Bentazon, Simetryn, Dimethametryn, Dimepiperat, Swep, Thiobencarb, Molinat, Esprocarb, Piperophos, Dimuron, SK-23, Bifenox und Acifluorfen ausgewählt ist.

8. Herbizidzusammensetzung nach Anspruch 5 oder 6, wobei der dritte Wirkstoff unter 2,4-D, MCPB, MCPA, Naproanilid, MCPA-Thioethyl, Chlomethoxynyl, Butachlor, Pretilachlor, Mefenacet, Pyrazolat, Pyrazoxyfen, Bentazon, Simetryn, Dimethametryn, Dimepiperat, Swep, Thiobencarb, Molinat, Esprocarb, Piperophos, Dimuron und SK-23 ausgewählt ist.

9. Herbizidzusammensetzung nach einem der vorhergehenden Ansprüche, die 0,01 bis 99 Gew.-% Wirkstoffe enthält.

10. Herbizidzusammensetzung nach Anspruch 9, die 0,4 bis 30 Gew.-% Wirkstoffe enthält.

11. Herbizidzusammensetzung nach einem der vorhergehenden Ansprüche, wobei das Gewichtsverhältnis (Gewicht/Gewicht) B/A 0,01 bis 100 beträgt.

12. Herbizidzusammensetzung nach Anspruch 11, wobei das Gewichtsverhältnis (G/G) B/A 0,1 bis 5 beträgt.

13. Herbizidzusammensetzung nach einem der Ansprüche 5 bis 12, wobei der dritte Wirkstoff (C) SK-23 ist und das Gewichtsverhältnis (G/G) C/A 5 bis 50 beträgt.

14. Herbizidzusammensetzung nach einem der vorhergehenden Ansprüche, die außerdem mindestens einen grenzflächenaktiven Stoff und Hilfsstoff enthält.

15. Herbizidzusammensetzung nach einem der Ansprüche 1 bis 9 in Form eines benetzbaren Pulvers, das 0,01 bis 35 % Wirkstoffe enthält.

16. Herbizidzusammensetzung nach einem der Ansprüche 1 bis 9 in Form eines Granulats, das 0,01 bis 35 % Wirkstoffe enthält.

17. Herbizidzusammensetzung nach einem der Ansprüche 1 bis 9 in Form einer fließfähigen Formulierung, die 0,5 bis 50 % Wirkstoffe, 3 bis 10 % Netzmittel oder Dispergiermittel und Wasser enthält.

18. Herbizidzusammensetzung nach Anspruch 1, bei der es sich im wesentlichen um eine wie zuvor in einem der Anwendungsbeispiele 1 bis 6 beschriebene Herbizidzusammensetzung handelt.

19. Herbizides Produkt, das (A) ein 1,3-Oxazin-4-on-Derivat gemäß der Definition in Beispiel 1 und (B) ein Sulfonylharnstoff-Derivat enthält, als Kombinationspräparat für die gleichzeitige, getrennte oder nacheinander erfolgende Verwendung zur Bekämpfung des Wachstums von Unkräutern.

20. Verfahren zur Bekämpfung des Wachstums von Unkräutern an einem Ort, das die Anwendung einer herbizidisch wirksamen Menge (A) eines 1,3-Oxazin-4-on-Derivats gemäß der Definition in Anspruch 1 und (B) eines Sulfonylharnstoff-Derivats an dem Ort umfaßt.

21. Verfahren nach Anspruch 20, wobei der Ort mit Reis bepflanzt ist oder für die Bepflanzung mit Reis vorgesehen ist.

22. Verfahren nach Anspruch 20 oder 21, wobei es sich bei den Unkräutern um *Echinochloa oryzicola*, *Echinochloa crus*-*galli*, *Monochoria vaginalis*, *Lindernia procumbens*, *Cyperus microiria*, *Scirpus juncoides*, *Alisma canaliculatum*, *Cyperus serotinus*, *Sagittaria pygmae*, *Eleocharis kuroguwai*, *Digitaria ciliaris*, *Setaria viridis oder Cyperus rotundus*.

## Revendications

1. Composition herbicide comprenant (A) au moins un dérivé de 1,3-oxazin-4-one de formule : 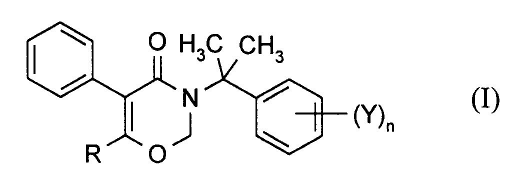 dans laquelle R représente un radical méthyle ou éthyle ; Y représente un atome d'halogène, un radical alkyle contenant de 1 à 6 atomes de carbone non substitué ou substitué par un ou plusieurs atomes d'halogènes, ou un radical alkoxy contenant de 1 à 6 atomes de carbone non substitué ou substitué par un ou plusieurs atomes d'halogènes ; et n représente 0, 1, 2 ou 3 ; et (B) un dérivé de sulfonylurée ; en association avec un diluant ou une charge acceptables en agriculture.

2. Composition herbicide selon la revendication 1 dans laquelle (B) est la 1-{[ortho(cyclopropylcarbonyl)phényl]sulfamoyl}-3-(4,6-diméthoxy-2-pyrimidinyl)urée.

3. Composition herbicide selon la revendication 1 ou 2 dans laquelle Y représente chloro, fluoro, méthyle, fluorométhyle, fluorométhoxy, chlorométhyle ou chlorométhoxy.

4. Composition herbicide selon la revendication 3 dans laquelle (Y)ₙ représente 3-chloro, 3,5-dichloro, 3-fluoro, 4-fluoro, 2-chloro, 3-méthyle ou 3-difluorométhoxy.

5. Composition herbicide selon l'une quelconque des revendications 1 à 4 comprenant de plus (C) une troisième matière active herbicide.

6. Composition herbicide selon la revendication 5 dans laquelle la troisième matière active est un dérivé phénoxy, un diphényléther, une acide-amide, une diazine, une triazine, un carbamate, un composé organophosphoré ou un dérive durée.

7. Composition herbicide selon la revendication 5 ou 6 dans laquelle la troisième matière active est choisie parmi le 2,4-D, le MCPB, le MCPA, la naproanilide; le MCPA thioéthyle, le chlométhoxynyl, le butachlor, le prétilachlor, le méfénacet, le pyrazolate, le pyrazoxyfen, la bentazone, la simétryne, la diméthamétryne, le dimépipérate, le swep, le thiobencarb, le molinate, l'esprocarb, le pipérophos, le dimuron, le SK-23, le bifénox et l'acifluorfen.

8. Composition herbicide selon la revendication 5 ou 6 dans laquelle la troisième matière active est choisie parmi le 2,4-D, le MCPB, le MCPA, la naproanilide, le MCPA thioéthyle, le chlométhoxynyl, le butachlor, le prétilachlor, le méfénacet, le pyrazolate, le pyrazoxyfen, la bentazone, la simétryne, la diméthamétryne, le dimépipérate, le swep, le thiobencarb, le molinate, l'esprocarb, le pipérophos, le dimuron et le SK-23.

9. Composition herbicide selon l'une quelconque des revendications précédentes qui comprend de 0,01% à 99% (poids/poids) de matières actives.

10. Composition herbicide selon la revendication 9 qui comprend de 0,4% à 30% (poids/poids) de matières actives.

11. Composition herbicide selon l'une quelconque des revendications précédentes dans laquelle le ratio (poids/poids) B/A est compris entre 0,01 et 100.

12. Composition herbicide selon la revendication 11 dans laquelle le ratio (poids/poids) B/A est compris entre 0,1 et 5.

13. Composition herbicide selon l'une quelconque des revendications 5 à 12 dans laquelle la troisième matière active (C) est le SK-23 et le ratio (poids/poids) C/A est compris entre 5 et 50.

14. Composition herbicide selon l'une quelconque des revendications précédentes comprenant de plus au moins un surfactant ou adjuvant.

15. Composition herbicide selon l'une quelconque des revendications 1 à 9 sous forme de poudre mouillable comprenant de 0,01% à 35% de matières actives.

16. Composition herbicide selon l'une quelconque des revendications 1 à 9 sous forme de granulés comprenant de 0,01% à 35% de matières actives.

17. Composition herbicide selon l'une quelconque des revendications 1 à 9 sous forme de formulation flow comprenant de 0,5% à 50% de matières actives, de 3% à 10% d'agents mouillants ou dispersants, et de l'eau.

18. Composition herbicide selon la revendication 1 substantiellement décrite précédemment dans l'un quelconque des Exemples d'Application 1 à 6.

19. Produit herbicide comprenant (A) un dérivé de 1,3-oxazin-4-one défini dans la revendication 1, et (B) un dérivé de sulfonylurée, sous forme de préparation combinée pour une utilisation simultanée, séparée ou séquentielle, pour le contrôle de la croissance des mauvaises herbes.

20. Méthode pour contrôler de la croissance des mauvaises herbes en un lieu qui comprend l'application en ce lieu d'une quantité efficace herbicide de (A) un dérivé de 1,3-oxazin-4-one défini dans la revendication 1, et (B) un dérivé de sulfonylurée.

21. Méthode selon la revendication 20 dans laquelle le lieu est planté ou doit être planté avec du riz.

22. Méthode selon la revendication 20 ou 21 dans laquelle les mauvaises herbes sont *Echinochloa oryzicola*, *Echinochloa crus-galli*, *Monochoria vaginalis*, *Lindernia procumbens*, *Cyperus microiria*, *Scirpus juncoides*, *Alisma canaliculatum*, *Cyperus serotinus*, *Sagittaria pygmae*, *Eleocharis kuroguwai*, *Digitaria ciliaris*, *Setaria viridis*, ou *Cyperus rotundus*.
